# EUROPÄISCHE PATENTANMELDUNG

(11) **EP 3 205 521 A2**
(43) Veröffentlichungstag der Anmeldung: **16.08.2017**
(21) Anmeldenummer: 17155880.2
(22) Anmeldetag: 13.02.2017
(51) Int. Cl.: B60J 7/00

(54) **SONNENSCHUTZ FÜR EIN DACH IN EINEM FAHRZEUG, FAHRZEUG UMFASSEND DEN SONNENSCHUTZ, VERFAHREN ZUM SONNENSCHUTZ IN EINEM FAHRZEUG**

(30) Priorität: 12.02.2016 DE 102016001687
(71) Anmelder: Falk-Porsche-Technik GmbH, 81829 München (DE)
(72) Erfinder: Ismailova, Aziza U., 80639 München (DE); Ismailov, Ulugbek, 80637 München (DE)
(74) Vertreter: Stolmár & Partner Patentanwälte PartG mbB

(57) **Zusammenfassung**

Sonnenschutz für ein Dach in einem Fahrzeug (10), umfassend ein positionierbares Sonnenschutzelement (14) zum partiellen Zurückhalten von Sonnenlicht, das durch Verschieben in einer lichtdurchlässigen Öffnung (12) im Dach derart positioniert werden kann, dass eine Blendung einer Person in dem Fahrzeug (10) durch durch die Öffnung (12) einstrahlendes Sonnenlicht verhindert werden kann, sowie ein Fahrzeug (10) und ein Verfahren zum Sonnenschutz in einem Fahrzeug (10).

## Beschreibung

### Gebiet der Erfindung

Die Erfindung betrifft einen Sonnenschutz und ein Verfahren zum Sonnenschutz in einem Fahrzeug wie Personenkraftwagen (Pkw), insbesondere für ein Dach in dem Fahrzeug, sowie das Fahrzeug.

### Stand der Technik

EP 1 258 379 A2 offenbart eine Schiebedachvorrichtung für ein Fahrzeug aufweisend ein Dach mit einer Schiebedachöffnung; eine Verkleidung, die an das Dach angrenzt; eine Führungsvorrichtung, die zwischen dem Dach und der Verkleidung angeordnet ist, wobei die Führungsvorrichtung seitlich ausgerichtete, voneinander beabstandete Führungsteile aufweist und eine Sonnenschutzaufnahme, die zwischen den Führungsteilen angeordnet ist; und einen zwischen einer offenen und einer geschlossenen Stellungen bewegbaren, elastischen Sonnenschutz, wobei der elastische Sonnenschutz in der geschlossenen Stellung mindestens einen Abschnitt der Öffnung abdeckt und in der offenen Stellung in der Sonnenschutzaufnahme aufgenommen ist, wobei der elastische Sonnenschutz zwei elastische, gegenüberliegende Sonnenschutzteile aufweist, wobei jedes der flexiblen, gegenüberliegenden Sonnenschutzteile in einer Sonnenschutzaufnahme aufgenommen ist, und wobei die zwei elastischen, gegenüberliegenden Sonnenschutzteile in einer Richtung parallel zu den Führungsteilen zwischen der offenen und der geschlossenen Stellung bewegbar sind.

DE 10 2013 009 083 A1 offenbart ein Dachmodul für ein Fahrzeugdach eines Personenkraftwagens, mit wenigstens zwei lichtdurchlässigen Bereichen, welchen jeweilige Sonnenschutzelemente zugeordnet, sind, welche mittels einer Antriebseinrichtung zwischen einer Offenstellung und einer den jeweils zugeordneten Bereich zumindest teilweise abdeckenden Beschattungsstellung verstellbar sind, wobei die Sonnenschutzelemente mittels eines gemeinsamen Aktors der Antriebseinrichtung verstellbar sind.

### Offenbarung der Erfindung

Es ist eine Aufgabe der vorliegenden Erfindung, die Sicherheit und oder den Komfort von Fahrzeugen zu verbessern.

Die erfindungsgemäßen Vorrichtungen und Verfahren mit den Merkmalen der unabhängigen Ansprüche haben den Vorteil, dass eine Blendwirkung durch Sonnenlicht reduziert bzw. eliminiert werden kann.

Der erfindungsgemäße Sonnenschutz für ein Dach in einem Fahrzeug umfasst ein positionierbares Sonnenschutzelement zum partiellen Zurückhalten von Sonnenlicht, das durch Verschieben in einer lichtdurchlässigen Öffnung im Dach derart positioniert werden kann, dass eine Blendung einer Person bzw. von Personen in dem Fahrzeug durch durch die Öffnung einstrahlendes Sonnenlicht verhindert, oder zumindest vermindert, werden kann. Die Sonnenlichteinstrahlung durch das Dach kann in Abhängigkeit vom Stand der Sonne und / oder einem Einfallswinkel des Sonnenlichts variieren. Die Verschiebbarkeit des Sonnenschutzelements gewährleistet somit eine Blendschutzwirkung und ermöglicht die Abhaltung von Sonnenlichteinstrahlung in den Bereich einer sich im Fahrzeug befindenden Person, ohne dass die Sonnenlichteinstrahlung in das Fahrzeug dabei vollständig verhindert wird. Die Person kann ein Fahrer oder eine Fahrerin des Fahrzeugs sein. Durch die Verhinderung der Blendung durch das Sonnenlicht kann somit die Sicherheit des Fahrzeugs bzw. des Fahrbetriebs verbessert werden. Die Person kann ein anderer Insasse des Fahrzeugs, zum Beispiel ein Beifahrer oder eine Beifahrerin, sein. Durch die Verhinderung der Blendung durch das Sonnenlicht kann somit weiterhin der Komfort des Fahrzeugs verbessert werden. Dabei kann eine Flächengröße des Sonnenschutzelements zwischen 10% und 50 %, beispielsweise zwischen 20 % und 40 %, vorzugsweise zwischen 25 % und 35 % wie 30 % der Flächengröße der Öffnung betragen. Dadurch kann eine Abstimmung zwischen der Sonnenlichteinstrahlung und der Wirkung des Sonnenschutzes beeinflusst werden. Das Sonnenschutzelement ist insbesondere plattenartig und formstabil ausgebildet. Somit kann die Stabilität des Sonnenschutzelements erhöht werden und gleichzeitig eine äußerst platzsparende Ausgestaltung aufweisen, bei der nur sehr schmale Seitenschienen zum Führen des Sonnenschutzelements notwendig sind. Insbesondere ist das Sonnenschutzelement flach ausgebildet, also mit einer geringeren Dicke als 7mm, bevorzugt 5mm oder weniger und weiter vorzugsweise sogar 3mm oder weniger.

Der erfindungsgemäße Sonnenschutz kann weiterhin ein weiteres Sonnenschutzelement umfassen, das die Öffnung alleine oder zusammen mit dem Sonnenschutzelement vollständig gegen einstrahlendes Sonnenlicht verschließen kann. Somit kann eine Sonnenlichteinstrahlung durch das Dach in den Innenraum des Fahrzeugs verhindert werden. Dadurch kann eine vollständige Abblendung des Innenraums vor durch die Öffnung einstrahlendem Sonnenlicht erreicht werden.

Das weitere Sonnenschutzelement kann verschiebbar ausgebildet sein. Dadurch kann das weitere Sonnenschutzelement beispielsweise plattenartig oder schildartig ausgebildet werden. Somit kann die Stabilität des weiteren Sonnenschutzelements erhöht werden Dabei kann die Verkleinerung bzw. Vergrößerung der wirksamen lichtabhaltenden Flächengröße durch Verschieben unter ein lichtundurchlässiges weiteres Fahrzeugteil erfolgen. Das weitere Sonnenschutzelement kann aufrollbar ausgebildet sein. Dabei kann die lichtabhaltende Flächengröße des weiteren Sonnenschutzelements durch Aufrollen verkleinert bzw. durch Abrollen vergrößert werden. Dabei kann das weitere Sonnenschutzelement besonders Platz sparend ausgebildet sein. Die Veränderung der Flächengröße des weiteren Sonnenschutzelements ermöglicht es der sich im Fahrzeug befindenden Person, die Lichtverhältnisse der Situation entsprechend anzupassen. Das Sonnenschutzelement kann vorzugsweise ferner durch Verschieben unter das weitere Sonnenschutzelement bewegt werden.

Der erfindungsgemäße Sonnenschutz kann derart ausgebildet sein, dass er in einem offenen Dach, Schiebedach, Glasdach oder Panoramadach angeordnet werden kann. Dabei können das Sonnenschutzelement und / oder weitere Sonnenschutzelement als Elemente des Dachs beispielsweise des Schiebedachs ausgebildet sein. Dadurch kann der erfindungsgemäße Sonnenschutz in verschiedenen Dachvarianten des Fahrzeugs verwendet werden. Dies ermöglicht eine Anpassung der Sonnenlichteinstrahlung durch die Öffnung im Dach je nach Wetterlage, da der Sonnenschutz bei warmen Außentemperaturen mit geöffnetem Dach genauso einsetzbar ist wie bei kalten Außentemperaturen mit geschlossenem lichtdurchlässigem Dach.

Das verschiebbare Sonnenschutzelement kann manuell positioniert werden. Dabei kann das Sonnenschutzelement unmittelbar durch händische Bewegung verschiebbar ausgebildet sein. Dies ermöglicht der sich im Fahrzeug befindenden Person, die Position des Sonnenschutzelements direkt zu bestimmen. Dadurch kann der erfindungsgemäße Sonnenschutz besonders einfach und / oder kostengünstig verwirklicht werden. Weiterhin kann der erfindungsgemäße Sonnenschutz nachträglich in das Dach des Fahrzeugs besonders einfach und / oder kostengünstig eingebaut werden.

Das verschiebbare Sonnenschutzelement kann mittels eines Schalterelements positioniert werden. Somit kann das verschiebbare Sonnenschutzelement beispielsweise durch händische Schalterbetätigung verschiebbar sein. Dies ermöglicht der sich im Fahrzeug befindenden Person, die Position des Sonnenschutzelements komfortabel zu bestimmen. Dabei kann das Schalterelement beispielsweise mit einem Aktuator des Sonnenschutzelements oder über eine Steuerungseinrichtung, zum Beispiel einer Steuerungseinrichtung des Fahrzeugs, mit dem Aktuator verbunden sein.

Der erfindungsgemäße Sonnenschutz kann weiterhin einen Lichtsensor zum Erfassen des einstrahlenden Sonnenlichts umfassen, wobei das verschiebbare Sonnenschutzelement in Abhängigkeit des erfassten Sonnenlichts positioniert werden kann. Dies ermöglicht ein automatisches Ausrichten des verschiebbaren Sonnenschutzelements ohne Einwirken der sich im Fahrzeug befindenden Person.

Der Lichtsensor kann im Fahrzeug derart angeordnet sein, dass das Sonnenlicht im Bereich einer Person im Fahrzeug ermittelt werden kann. Dadurch kann das automatische Ausrichten des verschiebbaren Sonnenschutzelements verbessert werden.

Weiterhin kann der Lichtsensor an einer Kopfstütze des Fahrzeugs, zum Beispiel einer Kopfstütze eines Fahrersitzes, angeordnet sein. Dadurch kann der Lichtsensor im Bereich des Innenraums, in dem das durch die Öffnung im Dach eingestrahlte Sonnenlicht ermittelt werden soll, angeordnet werden.

Die Erfindung betrifft weiterhin ein Fahrzeug, das den erfindungsgemäßen Sonnenschutz umfasst.

Das erfindungsgemäße Verfahren zum Sonnenschutz in einem Fahrzeug umfasst ein Bereitstellen eines positionierbaren Sonnenschutzelements zum partiellen Zurückhalten von Sonnenlicht, das durch Verschieben in einer lichtdurchlässigen Öffnung im Dach des Fahrzeugs derart positioniert werden kann, dass eine Blendung einer Person in dem Fahrzeug durch durch die Öffnung einstrahlendes Sonnenlicht verhindert werden kann. Das erfindungsgemäße Verfahren kann weiterhin ein Bereitstellen eines weiteren Sonnenschutzelements umfassen, das die Öffnung zusammen mit dem Sonnenschutzelement vollständig gegen einstrahlendes Sonnenlicht verschließen kann.

Dabei kann das weitere Sonnenschutzelement verschiebbar oder aufrollbar ausgebildet werden.

Weiterhin kann der Sonnenschutz derart ausgebildet werden, dass er in einem offenen Dach, Schiebedach, Glasdach oder Panoramadach angeordnet werden kann.

Das verschiebbare Sonnenschutzelement kann manuell positionierbar ausgebildet werden.

Das verschiebbare Sonnenschutzelement kann mittels eines Schalterelements positionierbar ausgebildet werden.

Das erfindungsgemäße Verfahren kann weiterhin ein Bereitstellen eines Lichtsensors zum Erfassen des einstrahlenden Sonnenlichts umfassen.

Dabei kann der Lichtsensor im Fahrzeug derart angeordnet werden, dass das Sonnenlicht im Bereich einer Person im Fahrzeug ermittelt werden kann.

Weiterhin kann der Lichtsensor an einer Kopfstütze des Fahrzeugs, zum Beispiel einer Kopfstütze eines Fahrersitzes, angeordnet werden.

### Beschreibung der bevorzugten Ausführungsformen

Bevorzugte Ausführungsformen der Erfindung sind in der Zeichnung dargestellt und in der nachfolgenden Beschreibung näher erläutert.
Figur 1 zeigt eine schematische Darstellung eines Sonnenschutzes gemäß einer Ausführungsform der Erfindung integriert in ein Dach eines Fahrzeugs 10,
Figur 2 zeigt eine schematische Darstellung eines Sonnenschutzes gemäß einer weiteren Ausführungsform der Erfindung integriert in ein Dach eines Fahrzeugs 10,
Figur 3 zeigt eine weitere schematische Darstellung des Sonnenschutzes gemäß der Ausführungsform der Erfindung integriert in das Dach des Fahrzeugs 10,
Figur 4 zeigt eine weitere schematische Darstellung des Sonnenschutzes gemäß der weiteren Ausführungsform der Erfindung integriert in das Dach des Fahrzeugs 10,
Figur 5 zeigt eine andere schematische Darstellung des Sonnenschutzes gemäß der weiteren Ausführungsform der Erfindung integriert in das Dach des Fahrzeugs 10, und
Figur 6 zeigt eine schematische Darstellung eines Sonnenschutzes 20 gemäß einer anderen Ausführungsform der Erfindung.

Durch die Bereitstellung eines erfindungsgemäßen Sonnenschutzes kann eine Blendung einer sich in dem Fahrzeug 10 befindenden Person verhindert werden.

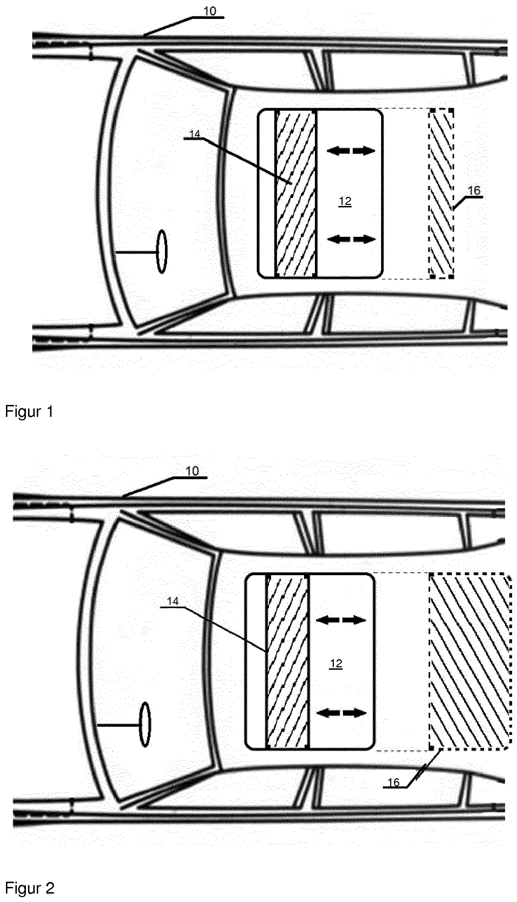

Figur 1 zeigt eine schematische Darstellung eines Sonnenschutzes gemäß einer Ausführungsform der Erfindung integriert in ein Dach eines Fahrzeugs 10.

Der Sonnenschutz umfasst ein verschiebbares Sonnenschutzelement 14. Das verschiebbare Sonnenschutzelement 14 ist plattenartig und formstabil ausgebildet. Es kann beispielsweise in Führungsschienen, die auf einer Fahrzeuginnenseite des Dachs befestigt sind, angeordnet sein. Das verschiebbare Sonnenschutzelement 14 befindet sich im Bereich einer Öffnung 12 im Dach und ist, wie in Figur 1 gezeigt, in der Öffnung 12 frei positionierbar. Somit kann eine Blendung einer Person, zum Beispiel eines Fahrers des Fahrzeugs 10, durch durch die Öffnung 12 einstrahlendes Sonnenlicht verhindert werden.

Das Sonnenschutzelement 14 wird in der Öffnung 12 des Dachs in dem Fahrzeug 10 derart positioniert, dass es durch Verschieben in der lichtdurchlässigen Öffnung 12 einstrahlendes Sonnenlicht partiell zurückhalten kann und die Blendung der Person im Fahrzeug verhindert wird. Dazu kann das Sonnenschutzelement 14 bevorzugt in den seitlichen Führungsschienen eingebracht sein, innerhalb derer das Sonnenschutzelement 14 schiebbar ist. Die Positionierbarkeit des Sonnenschutzelements 14 gewährleistet eine Blendschutzwirkung unabhängig vom Einfallswinkel des Sonnenlichts durch das Dach und ermöglicht die Abhaltung von Sonnenlichteinstrahlung in den Bereich einer sich im Fahrzeug 10 befindenden Person, ohne dass die Sonnenlichteinstrahlung oder das Eindringen von frischer Luft in das Fahrzeug 10 dabei vollständig verhindert werden. Bevorzugt beträgt die Fläche des Sonnenschutzelements 14 zwischen 10 % und 50 % der Gesamtfläche von den beiden Sonnenschutzelementen 14 und 16, besonders bevorzugt zwischen 20 % und 40 % der Gesamtfläche von den beiden Sonnenschutzelementen 14 und 16 und ganz besonders bevorzugt zwischen 25 % und 35 %, wie 30 % der Gesamtfläche von den beiden Sonnenschutzelementen 14 und 16. In der bevorzugten Ausführungsform ist das Sonnenschutzelement massiv ausgebildet, also als Vollmaterial. Dies kann beispielsweise in Form einer Kunststoffplatte ausgeführt sein. Die Dicke solcher Platten ist vorzugsweise maximal 7mm oder weniger, 5mm oder weniger oder 3mm oder weniger.

Das Sonnenschutzelement 14 kann ferner in der Fläche veränderbar sein, beispielsweise mit zusätzlichen rolloartigen Elementen, die aus dem Sonnenschutzelement ausziehbar sind und dessen Fläche vergrößern können. Eine andere Möglichkeit sind teleskopartige oder stapelartig angeordnete Zusatzplatten, die aus oder unter dem Sonnenschutzelement 14 aus- und eingefahren oder auseinander gezogen und zusammengeschoben werden können, um so die Sonnenschutzfläche zu vergrößern oder zu verkleinern. Die teleskopartige Ausbildung eignet sich besonders für massiv ausgebildete, flache Platten.

Der Sonnenschutz kann ein weiteres Sonnenschutzelement 16 umfassen. Das weitere Sonnenschutzelement 16 kann rolloartig und aufrollbar ausgebildet sein, kann aber auch plattenförmig ausgebildet sein. Das weitere Sonnenschutzelement 16 befindet sich, wie in Figur 1 gezeigt, unter einem lichtundurchlässigen Teil des Dachs und ist aufgerollt oder kann dort eingeschoben werden.

Das weitere Sonnenschutzelement 16 kann alleine oder mit dem ersten Sonnenschutzelement 14 zusammen die Öffnung 12 vollständig gegen einstrahlendes Sonnenlicht verschließen. Dabei befinden sich die beiden Sonnenschutzelemente 14 und 16 bevorzugt in denselben seitlichen Führungsschienen. Dann können das Sonnenschutzelement 14 und das zusätzliche Sonnenschutzelement 16 zusammen die Öffnung 12 im Dach vollständig abdecken. Die Führungsschienen für das weitere Sonnenschutzelement 16 können jedoch auch zusätzlich zu Führungsschienen für das Sonnenschutzelement 14 vorgesehen sein, so dass bspw. eine herkömmliche Abdeckung auf der Innenseite eines Schiebedachs die Öffnung im Dach vollständig verschließen können und das Sonnenschutzelement 14 lediglich zum Einsatz kommt, wenn das weitere Sonnenschutzelement 16 zumindest teilweise aus der Öffnung 12 wegbewegt wurde. Das weitere Sonnenschutzelement 16 ist bevorzugt in einem hinteren Bereich des Dachs angeordnet und kann durch Aufrollen in seiner lichtabhaltenden Fläche verkleinert bzw. durch Abrollen vergrößert werden. Die Veränderung der Flächengröße des weiteren Sonnenschutzelements 16 ermöglicht es der sich im Fahrzeug befindenden Person, die Lichtverhältnisse der Situation entsprechend anzupassen.

Der erfindungsgemäße Sonnenschutz ist einsetzbar in allen Dachvarianten des Fahrzeugs 10 und kann sowohl in einem offenen Dach, wie beispielsweise ein die Dachöffnung freilegendes Schiebedach oder Faltdach, als auch einem abgedeckten, lichtdurchlässigen Dach, wie beispielsweise einem Panoramaglasdach oder anderem lichtdurchlässigen Panoramadach, verwendet werden. Dies ermöglicht eine ideale Anpassung der Sonnenlichteinstrahlung durch die Öffnung 12 im Dach je nach Wetterlage, da der Sonnenschutz bei warmen Außentemperaturen mit geöffnetem Dach genauso einsetzbar ist wie bei kalten Außentemperaturen mit geschlossenem lichtdurchlässigem Dach.

Figur 2 zeigt eine schematische Darstellung eines Sonnenschutzes gemäß einer weiteren Ausführungsform der Erfindung integriert in ein Dach eines Fahrzeugs 10.

Der Sonnenschutz umfasst wiederum ein verschiebbares Sonnenschutzelement 14. Das verschiebbare Sonnenschutzelement 14 ist plattenartig und formstabil ausgebildet. Es kann beispielsweise in Führungsschienen, die auf einer Fahrzeuginnenseite des Dachs befestigt sind, angeordnet sein.

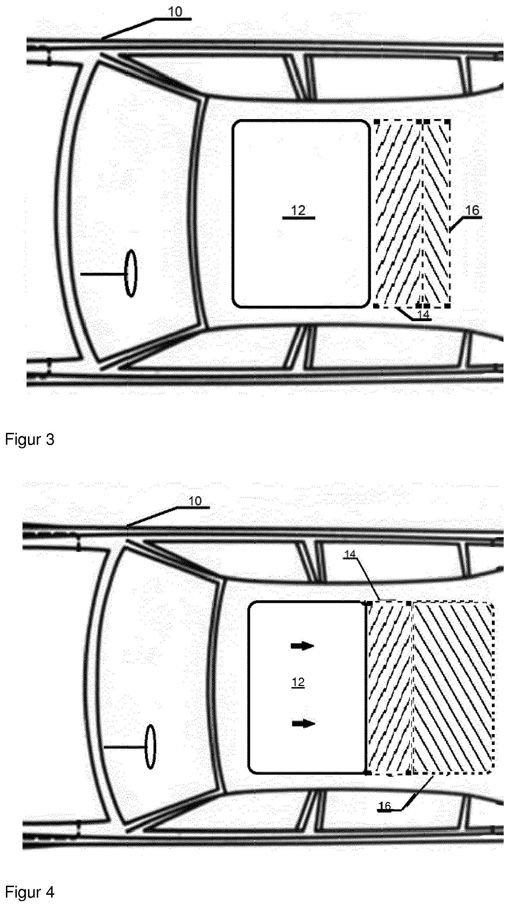

Der Sonnenschutz kann ein weiteres Sonnenschutzelement 16 umfassen, das insbesondere ebenfalls frei positionierbar ist. Das weitere Sonnenschutzelement 16 ist ebenfalls plattenartig und formstabil oder rolloartig ausgebildet. Es kann ebenfalls in den Führungsschienen angeordnet sein Das weitere Sonnenschutzelement 16 befindet sich, wie in Figur 1 gezeigt, unter einem lichtundurchlässigen Teil des Dachs. Das weitere Sonnenschutzelement 16 ist wiederum bevorzugt in dem hinteren und/oder vorderen Bereich des Dachs angeordnet und kann durch Verschieben unter den lichtundurchlässigen Teil des Dachs in seiner Licht abhaltenden Fläche verändert werden. Dabei sind die Elemente 14 und 16 unabhängig voneinander positionierbar. Diese können in der gleichen Führungsschienen in Längs- oder Querrichtung geführt werden. Figur 3 zeigt eine weitere schematische Darstellung des Sonnenschutzes gemäß der Ausführungsform der Erfindung integriert in das Dach des Fahrzeugs 10 in einem voll geöffneten Zustand.

Mit Bezug auf Figur 1 ist das verschiebbare Sonnenschutzelement 14 nun unter den lichtundurchlässigen Teil verschoben und befindet sich neben dem aufgerollten weiteren Sonnenschutzelement 16, so dass die Öffnung 12 im Dach vollständig frei liegt.

Figur 4 zeigt eine weitere schematische Darstellung des Sonnenschutzes gemäß der Ausführungsform der Erfindung integriert in das Dach des Fahrzeugs 10 in einem voll geöffneten Zustand.

Mit Bezug auf Figur 2 ist das verschiebbare Sonnenschutzelement 14 nun unter den lichtundurchlässigen Teil verschoben und befindet sich neben dem weiteren Sonnenschutzelement 16, so dass die Öffnung 12 im Dach vollständig frei liegt.

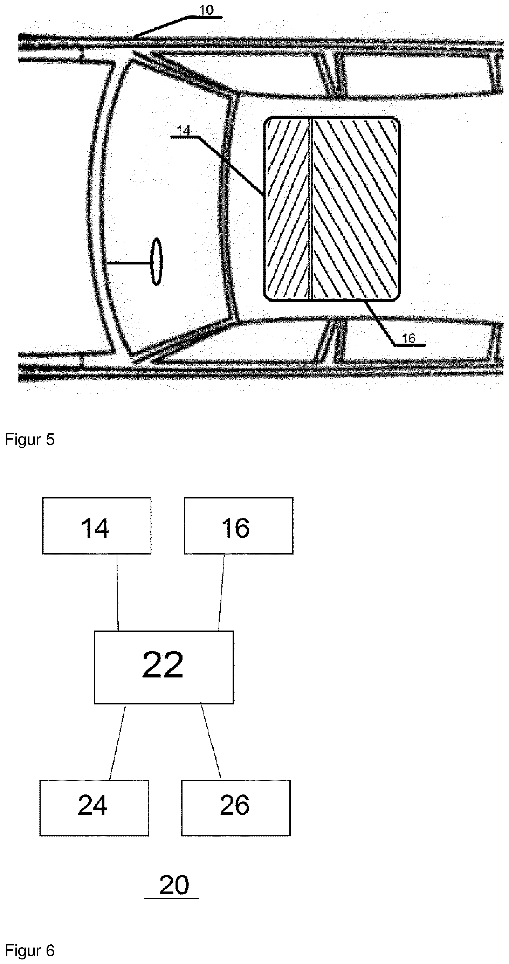

Figur 5 zeigt eine andere schematische Darstellung des Sonnenschutzes gemäß der weiteren Ausführungsform der Erfindung integriert in das Dach des Fahrzeugs 10 in einem geschlossenen Zustand.

Mit Bezug auf die Figuren 2 und 4 sind das verschiebbare Sonnenschutzelement 14 und das weitere Sonnenschutzelement 16 in die Öffnung 12 verschoben und verschließen die Öffnung zusammen vollständig gegen einstrahlendes Sonnenlicht.

Figur 6 zeigt eine schematische Darstellung eines Sonnenschutzes 20 gemäß einer anderen Ausführungsform der Erfindung.

Der Sonnenschutzes 20 umfasst das Sonnenschutzelement 14 und eine Schaltereinrichtung 24 zum Erfassen von Anweisungen der Person und / oder Bedienen des Sonnenschutzelements 14 und / oder einem Lichtsensor 26 zum Erfassen des einstrahlenden Sonnenlichts. Der Sonnenschutz 20 kann weiterhin das weitere Sonnenschutzelement 16 umfassen. Der Sonnenschutz 20 kann weiterhin eine Steuerungseinrichtung 22, die mit dem Sonnenschutzelement 14, der Schaltereinrichtung 24, dem Lichtsensor 26 und / oder dem weiteren Sonnenschutzelement 16 verbunden ist, zum Steuern bzw. Regeln des Sonnenschutzes 20 umfassen. Dabei kann die Steuerungseinrichtung 22 einen Schwellwert berücksichtigen und /oder den Sonnenschutz 20 in Abhängigkeit einer Intensität der Sonnenstrahlung steuern bzw. regeln.

Das verschiebbare Sonnenschutzelement 14 kann manuell positioniert werden. Dabei kann das Sonnenschutzelement 14 unmittelbar durch eine händische Schiebebewegung und / oder mittelbar über die elektrische Steuerung 22 durch händische Betätigung der Schaltereinrichtung 24 verschiebbar sein. Dies ermöglicht einer sich im Fahrzeug befindenden Person, die Position des Sonnenschutzelements direkt zu bestimmen.

Der erfindungsgemäße Sonnenschutz kann weiterhin den Lichtsensor 26 umfassen, der das einstrahlende Sonnenlicht erfasst. Dadurch kann das Sonnenschutzelement 14 in Abhängigkeit des von dem Lichtsensor 26 erfassten eingestrahlten Sonnenlichts positioniert werden und ermöglicht eine automatische Ausrichtung ohne Einwirken einer sich im Fahrzeug befindenden Person.

Der Lichtsensor 26, der das eingestrahlte Sonnenlicht erfasst, kann im Fahrzeug 10 derart angeordnet werden, dass die Sonnenlichteinstrahlung im Bereich einer sich im Fahrzeug 10 befindenden Person ermittelt werden kann. Bevorzugt ist der Lichtsensor 26 an einer Kopfstütze angebracht, besonders bevorzugt an der Kopfstütze eines Fahrersitzes. Damit befindet der Lichtsensor 26 direkt im Bereich des Innenraums, in dem das durch die Öffnung im Dach eingestrahlte Sonnenlicht ermittelt werden soll.

Der erfindungsgemäße Sonnenschutz, umfassend das verschiebbare Sonnenschutzelement 14 und ggf. das, zum Beispiel aufrollbare oder verschiebbare, weitere Sonnenschutzelement 16, die Schaltereinrichtung 24, den Lichtsensor 16 und / oder die Steuerungseinrichtung 22, kann in das Fahrzeug 10 integriert werden.

## Patentansprüche

1. Sonnenschutz für ein Dach in einem Fahrzeug (10), umfassend ein frei positionierbares Sonnenschutzelement (14) zum partiellen Zurückhalten von Sonnenlicht, das durch Verschieben in einer lichtdurchlässigen Öffnung (12) im Dach derart positioniert werden kann, dass eine Blendung einer Person in dem Fahrzeug (10) durch durch die Öffnung (12) einstrahlendes Sonnenlicht verhindert werden kann, wobei der Sonnenschutz ferner ein weiteres Sonnenschutzelement (16) aufweist.

2. Der Sonnenschutz nach Anspruch 1, weiterhin umfassend ein Sonnenschutzelement (16), das die Öffnung (12) zusammen mit dem Sonnenschutzelement (14) vollständig gegen einstrahlendes Sonnenlicht verschließen kann.

3. Der Sonnenschutz nach Anspruch 2, wobei das weitere Sonnenschutzelement (16) verschiebbar oder aufrollbar ausgebildet ist.

4. Der Sonnenschutz nach einem der vorangehenden Ansprüche, wobei der Sonnenschutz derart ausgebildet ist, dass er in einem offenen Dach, Schiebedach, Glasdach oder Panoramadach angeordnet werden kann.

5. Der Sonnenschutz nach einem der vorangehenden Ansprüche, wobei das verschiebbare Sonnenschutzelement (14) manuell positioniert werden kann.

6. Der Sonnenschutz nach Anspruch 5, wobei das Sonnenschutzelement (14) mittels eines Schalterelements (24) positioniert werden kann.

7. Der Sonnenschutz nach einem der vorangehenden Ansprüche, weiterhin umfassend einen Lichtsensor (26) zum Erfassen des einstrahlenden Sonnenlichts, wobei das verschiebbare Sonnenschutzelement (14) in Abhängigkeit des erfassten Sonnenlichts positioniert werden kann.

8. Der Sonnenschutz nach Anspruch 7, wobei der Lichtsensor (26) im Fahrzeug (10) derart angeordnet ist, dass das Sonnenlicht im Bereich einer Person im Fahrzeug (10) ermittelt werden kann.

9. Der Sonnenschutz nach Anspruch 8, wobei der Lichtsensor (26) an einer Kopfstütze des Fahrzeugs (10) angeordnet ist.

10. Fahrzeug (10), umfassend den Sonnenschutz nach einem der vorangehenden Ansprüche.

11. Verfahren zum Sonnenschutz in einem Fahrzeug (10), umfassend Bereitstellen eines frei positionierbaren Sonnenschutzelements (14) zum partiellen Zurückhalten von Sonnenlicht, das durch Verschieben in einer lichtdurchlässigen Öffnung (12) im Dach des Fahrzeugs (10) derart positioniert werden kann, dass eine Blendung einer Person in dem Fahrzeug (10) durch durch die Öffnung (12) einstrahlendes Sonnenlicht verhindert werden kann, wobei der Sonnenschutz ferner ein weiteres Sonnenschutzelement (16) aufweist.
